# EUROPEAN PATENT APPLICATION

(11) **EP 4 834 767 A1**
(43) Date of publication of application: **04.11.2026**
(21) Application number: 26175964.1
(22) Date of filing: 30.04.2026
(51) Int. Cl.: B64D 31/18, B64C 27/04, B64D 27/33, B64D 35/08, B64D 35/022, B64D 35/025

(54) **HYBRID ROTORCRAFT TORQUE MANAGEMENT WITH SPEED DROOP COMPENSATION**

(30) Priority: 02.05.2025 US 202519197808
(71) Applicant: Pratt & Whitney Canada Corp., Longueuil, Québec J4G 1A1 (CA)
(72) Inventor: JARVO, James, (01BE5) Longueuil, J4G 1A1 (CA); TANG, Poi Loon, (01BE5) Longueuil, J4G 1A1 (CA); LU, Xuening, (01BE5) Longueuil, J4G 1A1 (CA)
(74) Representative: Dehns

(57) **Abstract**

A method (300) includes determining (302), using an engine controller, a first torque demand of an engine based on predetermined performance maps, determining (304), using an engine controller, a second torque demand of the engine. The method (300) also includes summing (306), using an engine controller, the first torque demand and the second torque to generate a third torque demand, and supplying (316), using an engine controller, the third torque demand to an electric motor. The method (300) may include generating a positive value of the third torque demand for motoring application to achieve near-zero steady state rotor speed error. The method (300) may also include, upon calculating a negative value for the third torque demand, supplying (308, 310) the negative value of the third torque demand to the electric motor to enable battery charging using electric motor regeneration or to suppress rotor overspeed of the engine.

## Description

### TECHNICAL FIELD

This invention relates generally to gas turbine engine control systems and processes. More specifically, this invention relates to a system for hybrid rotorcraft torque management with speed droop compensation.

### BACKGROUND

Traditional multi-engine rotorcrafts, such as helicopters, are powered by gas turbine engines connected to the helicopter rotor system through a main gear box. Rotor speed is maintained by modulating fuel flow of the gas turbine engine. In a hybrid rotorcraft, one or more of the gas turbine engines are replaced by one or more electric motors. These rotorcrafts include hybrid electric powertrain control systems based on a distributed architecture where the thermal engine electronic controller (EEC) and the electric powertrain controller (EPU) are separated as two units and primary control functions and sensor feedback are communicated via serial communication (e.g., CAN or ARINC BUS). The engine-electric motor powertrain control generally governs speed (e.g., turboshaft, turboprop, and turbogenerator) with dynamic limiting controls based on engine mechanical limits (e.g., torque), thermal limits (e.g., ITT), the electrical powertrain mechanical limits (e.g., torque), and electrical limits (e.g., current). Hybrid operation of both powertrain systems requires a torque management scheme to collaborate a torque split strategy where the EEC maintains its speed governing authority and provides torque demand to the EPU. However, due to limited battery storage, the electric motor is used primarily as a torque boost when the engine has reached its torque limit, introducing rotor speed droop.

Accordingly, there is a need for improved rotorcraft torque management system to address these challenges.

### SUMMARY

This invention provides a system for hybrid rotorcraft torque management with speed droop compensation.

According to an aspect of the present invention, there is provided a method. The method includes determining, using an engine controller, a first torque demand of an engine based on predetermined performance maps, determining, using an engine controller, a second torque demand of the engine. The method also includes summing, using an engine controller, the first torque demand and the second torque to generate a third torque demand, and supplying, using an engine controller, the third torque demand to an electric motor.

Optionally, and in accordance with the above, determining a second torque demand of the engine comprises calculating a difference between an aircraft total load profile and a predetermined aircraft load map.

Optionally, and in accordance with the above, the method may also include, before supplying the third torque demand to the electric motor, applying, using the engine controller, one or more electric motor mechanical limiters to the third torque demand to generate a positive value of the third torque demand.

Optionally, and in accordance with any of the above, the method may also include, before supplying the third torque demand to the electric motor, filtering the third torque demand using a low pass filter.

Optionally, and in accordance with any of the above, determining a first torque demand based on predetermined performance maps may include (i) calculating an unlimited theoretical engine torque from a predetermined performance map based on power demand anticipation, maximum theoretical torque, and an engine core speed request, (ii) calculating an available engine torque from the predetermined performance map based on ambient conditions and a torque loop limiter (TLL) engine core speed request, and (iii) calculating the first torque demand as a difference between the unlimited theoretical engine torque and the available engine torque.

Optionally, and in accordance with any of the above, the second torque demand may include a rotor speed droop compensation term that is a function of rotor speed error (e.g., difference between rotor absolute speed reference and measured rotor speed), and altitude.

Optionally, and in accordance with any of the above, the second torque demand may be generated using an integrator that stops integrating upon reaching electric motor torque limits or a rotor speed reaching its reference or within a tolerance, and the integrator resets to an initial value (e.g., zero) when a rotor load torque decreases or when the engine is no longer limited by its engine limits.

Optionally, and in accordance with any of the above, the input to the integrator is the rotor speed error, with a bias, a gain, and a hysteresis band to adjust the rate of integration.

Optionally, and in accordance with any of the above, the rotor speed droop compensation term may include a deadband.

Optionally, and in accordance with any of the above, the method may include, upon calculating a positive value of the third torque demand, supplying the positive value of the third torque demand to the electric motor to achieve near-zero / zero steady speed error.

Optionally, and in accordance with any of the above, the method may also include, upon calculating a negative value for the third torque demand, supplying the negative value of the third torque demand to the electric motor to enable battery charging using electric motor regeneration.

Optionally, and in accordance with any of the above, the method may also include, upon calculating a negative value for the third torque demand, supplying the negative value of the third torque demand to the electric motor to suppress rotor overspeed of the engine.

According to another aspect of the present invention, an electronic device is provided. The electronic device includes an engine, an electric motor, and a processor operably coupled to the engine and the electric motor. The processor is configured to cause the electronic device to determine a first torque demand of the engine based on predetermined performance maps, determine a second torque demand of the engine by calculating a difference between an aircraft total load profile and a predetermined aircraft load map, sum the first torque demand and the second torque to generate a third torque demand, and supply the third torque demand to the electric motor.

Optionally, and in accordance with the above, the processor may be further configured to cause the electronic device to, before supplying the third torque demand to the electric motor, apply one or more electric motor mechanical limiters to the third torque demand to generate a positive value of the third torque demand.

Optionally, and in accordance with the above, the processor may be further configured to cause the electronic device to, before supplying the third torque demand to the electric motor, apply one or more electric motor mechanical limiters to the third torque demand to generate a negative value of the third torque demand.

Optionally, and in accordance with any of the above, the processor may be further configured to cause the electronic device to, before supplying the third torque demand to the electric motor, filter the third torque demand using a low pass filter.

Optionally, and in accordance with any of the above, while causing the electronic device to determine a first torque demand based on predetermined performance maps, the processor may be further configured to cause the electronic device to (i) calculate an unlimited theoretical engine torque from a predetermined performance map based on power demand anticipation, maximum theoretical torque, and an engine core speed request, (ii) calculate an available engine torque from the predetermined performance map based on ambient conditions and a torque loop limiter (TLL) engine core speed request, and (iii) calculate the first torque demand as a difference between the unlimited theoretical engine torque and the available engine torque.

Optionally, and in accordance with any of the above, the second torque demand may include a rotor speed droop compensation term that is a function of rotor speed error (e.g., difference between rotor absolute speed reference and measured rotor speed), and altitude.

Optionally, and in accordance with any of the above, the second torque demand may be generated using an integrator that stops integrating upon reaching electric motor torque limits or a rotor speed reaching its reference, and resets to an initial value (e.g., zero) when a rotor load torque decreases or when the engine is no longer limited by its engine limits.

Optionally, and in accordance with any of the above, the input to the integrator can be the rotor speed error, with a bias, a gain and a hysteresis band to adjust the rate of integration.

Optionally, and in accordance with any of the above, the rotor speed droop compensation term may include a deadband.

Optionally, and in accordance with any of the above, the processor may be configured to cause the electronic device to, upon calculating a positive value of the third torque demand, supplying the positive value of the third torque demand to the electric motor to achieve near-zero / zero steady state speed error.

Optionally, and in accordance with any of the above, the processor may be further configured to cause the electronic device to, upon calculating a negative value for the third torque demand, supply the negative value of the third torque demand to the electric motor to enable battery charging using electric motor regeneration.

Optionally, and in accordance with any of the above, the processor may be further configured to cause the electronic device to, upon calculating a negative value for the third torque demand, supplying the negative value of the third torque demand to the electric motor to suppress rotor overspeed of the engine.

According to another aspect of the present invention, a non-transitory computer-readable medium is provided. The non-transitory computer-readable medium includes program code, that when executed by at least one processor of an electronic device, causes the electronic device to determine a first torque demand of an engine based on predetermined performance maps, determine a second torque demand of the engine , by calculating a difference between an aircraft total load profile and a predetermined aircraft load map, or the second torque demand may be generated using an integrator that stops integrating upon reaching electric motor torque limits or rotor speed reaching its reference, and reset to an initial value (e.g., zero) when rotor load torque decreases or when the engine is no longer limited by its engine limits, the input to the integrator can be the rotor speed error, with a bias, a gain, and a hysteresis band to adjust the rate of integration, sum the first torque demand and the second torque to generate a third torque demand, and supply the third torque demand to an electric motor.

Optionally, and in accordance with the above, the program code may further include program code, that when executed by the at least one processor, causes the electronic device to, before supplying the third torque demand to the electric motor, apply one or more electric motor mechanical limiters to the third torque demand to generate a positive value of the third torque demand.

Optionally, and in accordance with any of the above, the program code may further include program code, that when executed by the at least one processor, causes the electronic device to before supplying the third torque demand to the electric motor, filter the third torque demand using a low pass filter.

Optionally, and in accordance with any of the above, the program code, that when executed by the at least one processor, causes the electronic device to determine a first torque demand based on predetermined performance maps, may further include program code, that when executed by the at least one processor, causes the electronic device to (i) calculate an unlimited theoretical engine torque from a predetermined performance map based on power demand anticipation, maximum theoretical torque, and an engine core speed request, (ii) calculate an available engine torque from the predetermined performance map based on ambient conditions and a torque loop limiter (TLL) engine core speed request, and (iii) calculate the first torque demand as a difference between the unlimited theoretical engine torque and the available engine torque.

Optionally, and in accordance with any of the above, the program code, when executed by the at least one processor, causes the electronic device to determine the second torque demand by calculating a difference between an aircraft total load profile and a predetermined aircraft load map.

Optionally, and in accordance with any of the above, the second torque demand may be generated using an integrator that stops integrating upon reaching electric motor torque limits or a rotor speed reaching its reference, and resets to an initial value (e.g., zero) when a rotor load torque decreases or when the engine is no longer limited by its engine limits.

Optionally, and in accordance with any of the above, the input to the integrator can be the rotor speed error, with a bias, a gain, and a hysteresis band to adjust the rate of integration.

Optionally, and in accordance with any of the above, the program code may further include program code, that when executed by the at least one processor, causes the electronic device to, upon calculating a positive value of the third torque demand, supplying the positive value of the third torque demand to the electric motor to achieve near-zero / zero steady state speed error.

Optionally, and in accordance with any of the above, the program code may further include program code, that when executed by the at least one processor, causes the electronic device to, upon calculating a negative value for the third torque demand, supply the negative value of the third torque demand to the electric motor to enable battery charging using electric motor regeneration.

Optionally, and in accordance with any of the above, the program code may further include program code, that when executed by the at least one processor, causes the electronic device to, upon calculating a negative value for the third torque demand, supplying the negative value of the third torque demand to the electric motor to suppress rotor overspeed of the engine.

Other technical features may be readily apparent to one skilled in the art from the following figures, descriptions, and claims.

### BRIEF DESCRIPTION OF THE DRAWINGS

For a more complete understanding of this invention, reference is made to the following description, taken in conjunction with the accompanying drawings, in which:
Figure 1 illustrates an example hybrid engine control system in accordance with this invention;
Figures 2A-2C illustrate example speed droop compensation diagrams of a hybrid engine control system in accordance with this invention;
Figure 3 illustrates an example method for hybrid rotorcraft torque management with speed droop compensation according to this invention; and
Figure 4 illustrates an example device for hybrid rotorcraft torque management with speed droop compensation in accordance with this invention.

### DETAILED DESCRIPTION

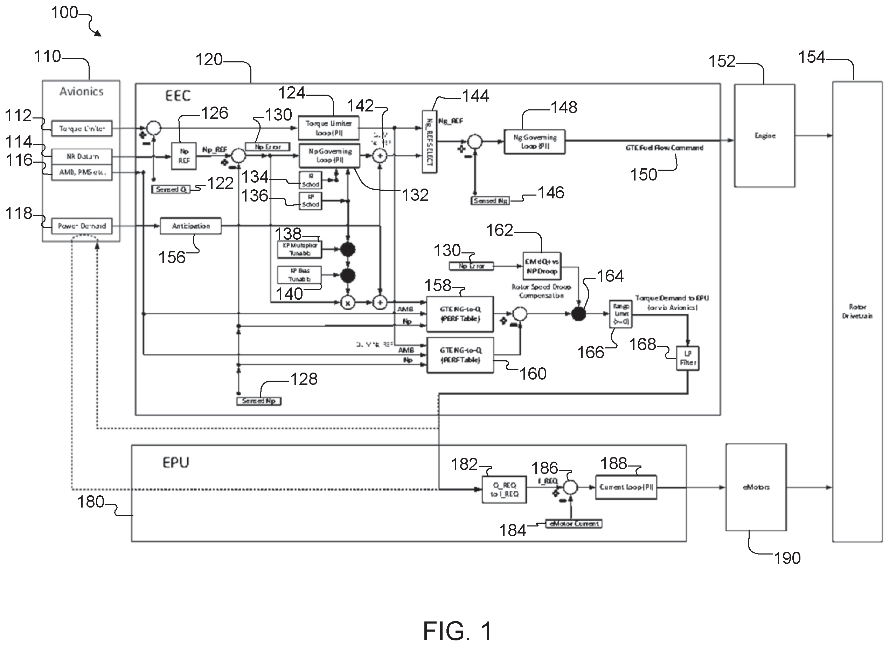

Figures 1 through 4, described below, and the various embodiments used to describe the principles of the present invention are by way of illustration only and should not be construed in any way to limit the scope of this invention. Those skilled in the art will understand that the principles of the present invention may be implemented in any type of suitably arranged device or system.

As described above, traditional multi-engine rotorcrafts, such as helicopters, are powered by gas turbine engines connected to the helicopter rotor system through a main gear box. Rotor speed is maintained by modulating fuel flow of the gas turbine engine. In a hybrid rotorcraft, one or more of the gas turbine engines are replaced by one or more electric motors. These rotorcrafts include hybrid electric powertrain control systems based on a distributed architecture where the thermal engine electronic controller (EEC) and the electric powertrain controller (EPU) are separated as two units and primary control functions and sensor feedback are communicated via serial communication (e.g., CAN or ARINC BUS). The engine-electric motor powertrain control generally governs speed (e.g., turboshaft, turboprop, and turbogenerator) with dynamic limiting controls based on engine mechanical limits (e.g., torque), thermal limits (e.g., ITT), the electrical powertrain mechanical limits (e.g., torque), and electrical limits (e.g., current). Hybrid operation of both powertrain systems requires a torque management scheme to collaborate a torque split strategy where the EEC maintains its speed governing authority and provides torque demand to the EPU.

Conventional rotorcraft engine control involves a cascade control strategy, where an outer loop functions to govern rotor speed with torque limiting control, and an inner loop functions to govern engine gas generator speed with mechanical limiting control. The speed governing or torque limiting control of the outer loop rotor is selected by the minimum of the two and only one control loop is active at the time. In other words, the outer loop governs speed or limits torque at any given time based on which is at its minimum value. This results in rotor speed deviation or droop when the EEC is managing torque using the torque limiter control loop.

Similarly, the electric motor control system may also include a cascade control architecture where the electric motor shaft speed governing is the outer loop and current control is the inner loop for torque regulation.

The cascaded control scheme works if the engine or the electric motor independently supply the aircraft power (e.g., non-hybrid operation via any rigid mechanical connections (e.g., gearbox)). However, hybrid operation of both powertrain systems requires a torque management scheme to collaborate the power/torque split strategy where there is only one speed governor, and the other governor may regulate torque or current.

Due to limited battery storage, the electric motor is used primarily as a power or torque boost when the engine has reached its torque limit, introducing rotor speed droop if there is no rotor speed droop compensation strategy as part of the torque management scheme in the EEC.

Lastly, since the EEC and the EPU are generally communicated directly or indirectly through avionics using the digital bus network, to ensure the control system stability within the given partially distributed hybrid electric powertrain control framework, the EEC torque management scheme needs to consider the proper torque limit and torque demand separation between the engine control and electric motor control, respectively, and provide sufficient control phase margin by gain separation considering all system lags, such as network delays caused by digital communication latency or transmission delays.

The present invention provides systems and methods for hybrid rotorcraft torque management with speed droop compensation. In particular, the present invention provides a hybrid rotorcraft torque management scheme that, in addition to determining a positive electric motor torque demand compensate for rotor droop, to achieve near-zero / zero steady state rotor speed error, the supervisory torque management scheme can also override the torque demand to a negative value. For example, the disclosed hybrid rotorcraft torque management scheme may override a negative value of the torque demand to enable battery charging via electric motor regeneration (absorbing power from the thermal engine) or to suppress rotor overspeed by commanding a negative torque demand to transition the electric motor into regeneration mode (absorbing power from the rotor system).

Figure 1 illustrates an example hybrid engine control system 100 configured for hybrid rotorcraft torque management with speed droop compensation in accordance with this invention.

As shown in Figure 1, the hybrid engine control system 100 includes an avionics controller 110. The avionics controller 110 includes torque limiter 112, a rotor speed (Nr) datum 114, an ambient condition block (AMB) 116, and a power demand 118. The avionics controller 110 is coupled to an EEC 120. In particular, the torque limiter 112 is coupled to a torque (Q) sensor 122 and input into a torque limiter 124. The Nr datum 114 is coupled to a rotor speed (Np) reference 126 that is compared with an Np output of a Np sensor 128 which is then used to determine a Np error 130. The Np error 130 is input into a Np governing loop 132 with additional input from an integral gain (Ki) schedule 134 and a proportional gain (Kp) schedule 136. The Np governing loop 132 then produces a percent engine core speed (Ng) reference 142, including the anticipated percent Ng reference calculated by an anticipation module 156 using the power demand 118 input. The output of the torque limiter 124 and the percent Ng reference 142 are input into a Ng reference selector 144. The Ng reference selector 144 outputs a selected Ng reference that is adjusted by a Ng sensor 146 before being input into Ng governing loop 148. The Ng governing loop 148 then generates a GTE fuel flow command 150 that is provided to an engine 152 to drive a rotor drivetrain 154.

The power demand 118 is coupled to an anticipation module 156 that outputs into the percent Ng reference 142 and a gas turbine engine (GTE) Ng-to-Q performance table 158. The GTE Ng-to-Q performance table 158 also receives data from the AMB 116 and the Np sensor 128. The Kp schedule 136 provides the base schedule to a tunable Kp multiplier 138 then a tunable Kp bias 140 before combining with output of the anticipation module 156 and subsequently inputting the sum into the GTE Ng-to-Q performance table 158 to produce an unlimited theoretical torque demand. Similarly, the output of the torque limiter 124, the AMB 116 and the Np sensor 128 is input into a GTE Ng-to-Q performance table 160 to produce an actual torque demand. The torque demands of the GTE Ng-to-Q performance table 158 and the GTE Ng-to-Q performance table 160 are then combined (e.g., subtracted from each other) with a rotor speed droop compensation generated by dQ-vs-Np droop compensation module 162 (e.g., using the Np error 130) in a combiner 164. The droop compensation module 162 may be a function of rotor speed error (e.g., difference between absolute rotor speed reference and measured rotor speed), and altitude, or alternatively, may be generated using an integrator that stops integrating upon reaching electric motor torque limits or rotor speed reaching its reference, and reset to an initial value (e.g., zero) when rotor load torque decreases or when the engine is no longer limited by its engine limit, the input to the integrator can be the rotor speed error, with a bias, a gain and a hysteresis band to adjust the rate of integration. The output of the combiner 164 may be a third torque demand and may be processed by one or more electric motor mechanical range limiter 166 and a low pass filter 168. This third torque demand may directly communicate to the electric motor controller EPU 180, or alternatively, this third torque demand may be routed through the avionics controller 110 to electric motor controller EPU 180.

The EPU 180 includes a torque-requirement-to-current-requirement (Q-to-I) conversion module 182 that received the third torque demand. The Q-to-I conversion module 182 outputs a required current that is compared to a motor current 184 in an EPU combiner 186. The output of the EPU combiner 186 is then output into a current loop 188 that is coupled to an electric motor 190 that drives the rotor drivetrain 154.

The engine control (EEC 120) is the only speed governing with torque limiter 124 control and electric motor 190 controls (EPU 180) are torque/current governing during hybrid operation. The EPU 180 may include a speed control loop (not shown) for the failure case when the engine 152 is not available (e.g., when the electric motor 190 is the only power/torque source to maintain rotor speed).

Although Figure 1 illustrates an example hybrid engine control system 100 configured for hybrid rotorcraft torque management with speed droop compensation, various changes may be made to Figure 1. For example, various components in Figure 1 may be combined, further subdivided, replicated, omitted, or rearranged and additional components may be added according to particular needs.

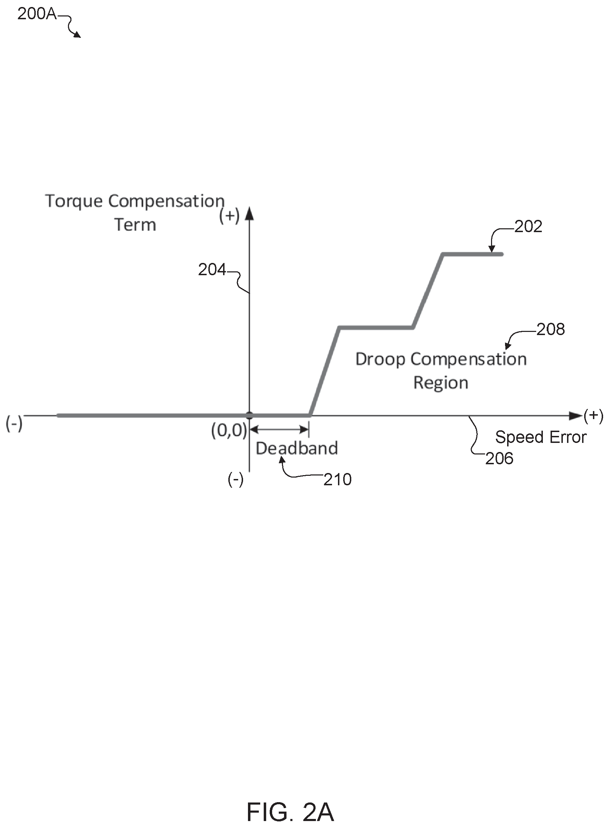

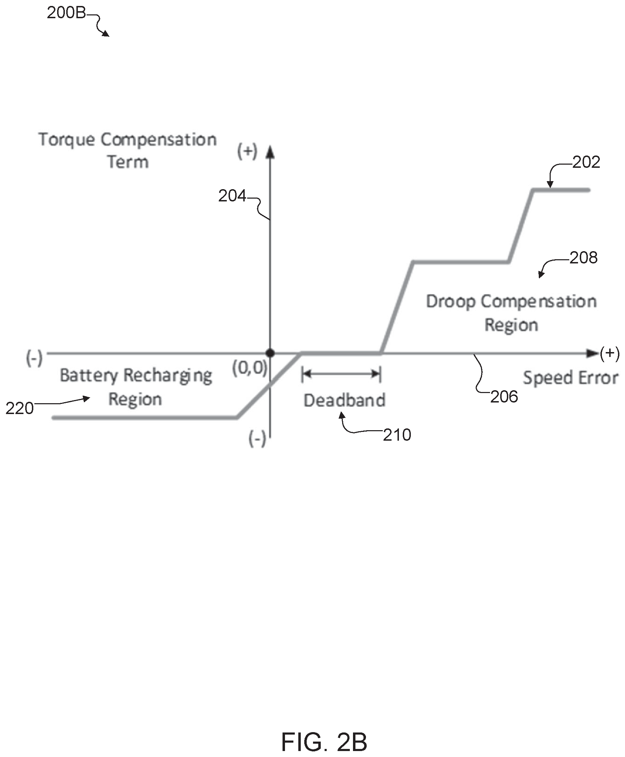

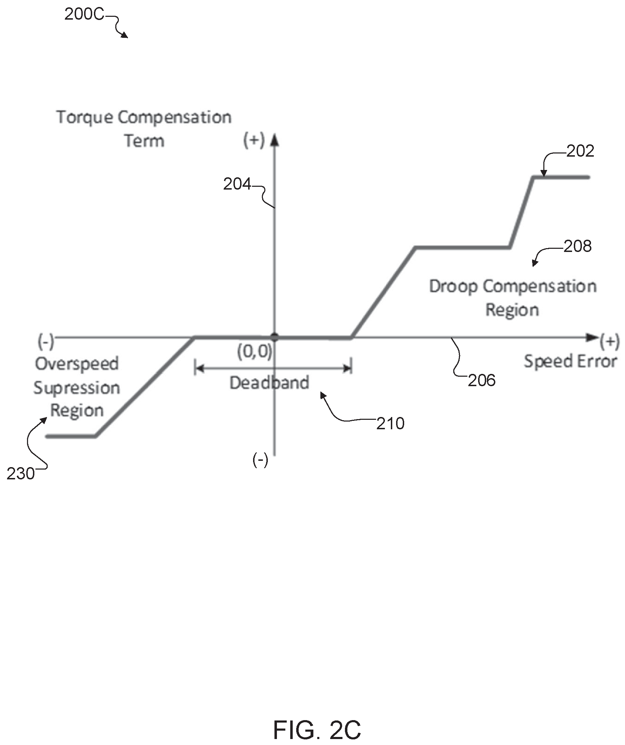

Figures 2A-2C illustrate example rotor speed droop compensation diagrams 200A, 200B, 200C of a hybrid engine control system in accordance with this invention. In particular, Figure 2A illustrates a speed droop compensation diagram 200A where torque compensation is used for rotor speed droop compensation, Figure 2B illustrates a speed droop compensation diagram 200B torque compensation is used for rotor speed droop compensation and for battery charging, and Figure 2C illustrates a speed droop compensation diagram 200C torque compensation is used for rotor speed droop compensation and for overspeed suppression.

As shown in Figure 2A, the speed droop compensation diagram 200A includes a torque demand compensation curve 202 as a function of a rotor speed error 206. As the speed error 206 increases, the torque compensation 204 increases to compensate for the rotor speed droop creating the droop compensation region 208. The torque demand curve 202 also includes a deadband 210 where no torque compensation occurs, reducing overcorrection or frequent torque correction within a predetermined rotor speed error tolerance. The additional torque demand is scheduled as function of rotor droop. In other words, the rotor speed error is determined by a difference between a speed reference and a measured speed. Alternatively, the rotor speed droop compensation may be generated using an integrator that stops integrating upon reaching electric motor torque limits or rotor speed reaching its reference, and reset to an initial value (e.g., zero) when rotor load torque decreases or when the engine is no longer limited by its engine limit. The input to the integrator can be the rotor speed error, with a bias, a gain, and a hysteresis band to adjust the rate of integration.

As shown in Figures 2B, the speed droop compensation diagram 200B includes the torque demand curve 202 as a function of the speed error 206. However, rather than the speed error 206 remaining positive or non-negative throughout the torque compensation 204 axis, the speed error 206 is allowed to be negative, creating a battery recharging region 220.

The speed droop compensation diagram 200B shows an extension to the torque demand curve 202 in Figure 2A where the low positive to negative speed error region is transitioned to a negative torque compensation term. In addition to determining a positive electric motor torque demand compensate for rotor droop, the hybrid engine control system 100 scheme can also override the torque demand to a negative value to enable battery charging via electric motor regeneration and absorbing power from the engine 152, which may be accomplished using the rotor speed droop compensation term function.

Similarly, as shown in Figures 2C, the speed droop compensation diagram 200C includes the torque demand curve 202 as a function of the speed error 206. The speed error 206 is allowed to be negative, however, the negative value of the speed error 206 is used to create an overspeed suppression region 230.

The speed droop compensation diagram 200C shows an extension to the torque demand curve 202 in Figure 2A where the negative speed error region (with a deadband) is transitioned to a negative torque compensation term. The same torque demand curve 202 can incorporate all three regions: (i) speed droop compensation region 208, (ii) battery charging region 220, and (iii) overspeed suppression region 230. In addition to determining a positive electric motor torque demand to compensate for rotor droop, the hybrid engine control system 100 scheme may also be used to suppress rotor overspeed by commanding a negative torque demand to transition the electric motor into regeneration mode and absorbing power from the rotor system, which may be accomplished using the rotor speed droop compensation term function.

Although Figures 2A-2C illustrate example speed droop compensation diagrams 200A, 200B, 200C of a hybrid engine control system, various changes may be made to Figures 2A-2C. For example, the size of the deadband may differ such that the overspeed suppression region or the battery charging region begin concurrently or upon any non-zero speed error value.

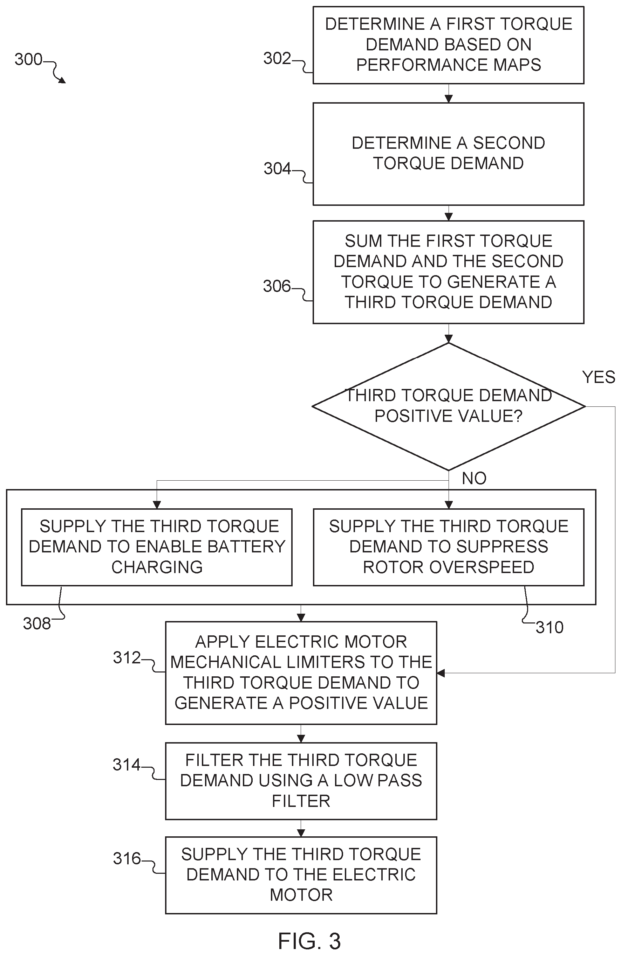

Figure 3 illustrates an example method 300 for hybrid rotorcraft torque management with speed droop compensation according to this invention. For ease of explanation, the method 300 of Figure 3 is described as being performed using the hybrid engine control system 100 of Figure 1. However, the method 300 may be used with any other suitable system and any other suitable hybrid engine control system.

As shown in Figure 3, a first torque demand of an engine is determined based on predetermined performance maps at step 302. For example, the first torque demand may be determined based on the Kp schedule 136, the tunable Kp multiplier 138, and the tunable Kp bias 140 using the Ng-to-Q performance table 158. Further, the first torque demand may be determined by calculating an unlimited theoretical engine torque in combination of power demand anticipation from the anticipation module 156, maximum torque, and an engine core speed request from the Np speed sensor 128, calculating an available engine torque from the predetermined performance map based on ambient conditions and a torque loop limiter (TLL) engine core speed request (e.g., an output of the torque loop limiter 124), and calculating the first torque demand as a difference between the unlimited theoretical engine torque and the available engine torque. The predetermined engine performance maps are used to minimize the inaccuracy or noisy information from the Q sensor 122 measurements. The unlimited theoretical engine torque is estimated from the predetermined performance map, based on ambient conditions (e.g., altitude), rotorcraft power demand anticipation 156, maximum theoretical torque, and the engine core speed request as a result of speed loop error (Np error) multiplied by a proportional gain (Kp). The Kp can be a function (as equations or lookup tables) of corrected engine core speed (corrected to ambient or engine inlet temperature) and altitude, with an optional scaling factor. It can also be a function of measured engine output shaft or rotor speed, measured torque, altitude, aircraft air speed, collective and/or pedal inputs. Second, the actual available engine torque is estimated from the predetermined performance map, based on ambient conditions (e.g., altitude), and the engine core speed request from the torque limiter loop. Alternatively, this actual available engine torque can be taken as the measured torque. The first torque demand (e.g., the torque demand without rotor speed compensation) is calculated as the difference between unlimited theoretical engine torque and actual available engine torque.

A second torque demand of the engine is determined by calculating a difference between an aircraft total load profile and a predetermined aircraft load map at step 304. Alternatively the second torque demand of the engine is determined using an integrator that stops integrating upon reaching electric motor torque limits or rotor speed reaching its reference, and reset to an initial value (e.g., zero) when rotor load torque decreases or when the engine is no longer limited by its engine limit, the input to the integrator can be the rotor speed error, with a bias, a gain, and a hysteresis band to adjust the rate of integration.

The second torque demand includes a rotor speed droop compensation term that is a function of rotor speed error (e.g., difference between rotor absolute speed reference and measured rotor speed), and altitude. The rotor speed droop compensation term includes or is a function of a deadband (e.g., the deadband 210). The second torque demand is calculated by identifying the difference between the aircraft total load profile and the predetermined aircraft load map (e.g., as digital power demand to the EEC or built-in the EEC as function of collective and/or pedal). Or alternatively, the second torque demand is generated using an integrator that stops integrating upon reaching electric motor torque limits or rotor speed reaching its limit, and reset to an initial value (e.g., zero) when rotor load torque decreases or when the engine is no longer limited by its engine limit. The input to the integrator can be the rotor speed error, with a bias, a gain, and a hysteresis band to adjust the rate of integration. The rotor speed droop compensation may be a positive term added to the second torque demand as an "uptrim" for the EPU 180 to compensate for rotor speed droop. The rotor speed droop compensation term can be a function (as integrator actions or lookup tables) of rotor speed error (e.g., difference between rotor absolute speed reference and measured rotor speed), and, altitude. A deadband or hysteresis can be incorporated in this rotor speed droop compensation function to provide an activation or deactivation of the second torque demand uptrim. The rotor speed droop compensation can be active all the time to demand torque boost from the electric motor 190 before the engine 152 reaches its torque limit, or only at or after the engine 152 is at its torque limit. When the latter behavior is desired, the torque demand uptrim can be based on the third torque demand and override to zero when the third torque demand is below a positive threshold or, otherwise, add the uptrim.

The first torque demand and the second torque are summed to generate a third torque demand at step 306. For example, the first torque demand output as the difference from the Ng-to-Q performance table 158 and the output from the Ng-to-Q performance table 160, and the second torque demand output from the rotor speed compensation dQ-vs-Np droop module 162, may be summed at the combiner 164. The droop compensation module 162 may be a function of rotor speed error (e.g., difference between absolute rotor speed reference and measured rotor speed), and altitude, or alternatively, may be generated using an integrator that stops integrating upon reaching electric motor torque limits or rotor speed reaching its reference, and reset to an initial value (e.g., zero) when rotor load torque decreases or when the engine is no longer limited by its engine limit, the input to the integrator can be the rotor speed error, with a bias, a gain, and a hysteresis band to adjust the rate of integration. The sum of the first torque demand and the second torque demand may result in a positive value for the third torque demand. In such cases, the method 300 may proceed to supplying the third torque demand to step 312. If the sum of the first torque demand and the second torque demand results in a negative value for the third torque demand, the method 300 may proceed to either optional step 308, optional step 310, before step 312.

Upon calculating a negative value for the third torque demand, the negative value of the third torque demand is supplied to the electric motor to enable battery charging using electric motor regeneration at optional step 308. For example, the third torque demand is supplied to the EPU 180 causing the electric motor 190 to consume the excess torque from the engine 152 to charge a battery of the electric motor 190, regenerating the electric motor 190.

Upon calculating a negative value for the third torque demand, the negative value of the third torque demand is supplied to the electric motor to suppress rotor overspeed of the engine at optional step 310. For example, the third torque demand is supplied to the EPU 180 causing the electric motor 190 to consume the excess torque from the engine 152 to suppress or reduce the produced torque from the engine 152 to prevent overspeed of the engine 152.

One or more electric motor mechanical limiters are applied to the third torque demand to generate a positive or negative range threshold of the third torque demand at step 312. For example, the positive or negative value of the third torque demand may be supplied to a range limiter 166 that imposes a positive only range limit on the third torque demand, forcing a non-negative value for motoring application. Or the positive or negative value of the third torque demand may be supplied to a range limiter 166 that imposes a positive to negative range limit on the third torque demand, allowing for generating application. A range limit is applied to ensure the third torque demand is within the minimum and maximum mechanical limits of the electrical motor 190 (e.g., positive only for motoring mode of electrical motor 190 application; or negative for generating mode of electrical motor 190 application).

The third torque demand is filtered using a low pass filter at optional step 314. For example, after range limiting in step 312, the third torque demand may be passed through the low pass filter 168. The low pass filter 168 is optional to provide proper control damping or bandwidth separation between EEC 120 and EPU 180. The low pass filter 168 may reside in EEC 120, the avionics controller 110, or EPU 180. The strength of the low pass filter 168 may be directional where an increasing or decreasing direction may have different lag time constant.

The third torque demand is supplied to an electric motor at step 316. For example, after optional filtering in step 314, the third torque demand is supplied to the Q-to-I conversion module 182 of the EPU 180 for supply to the electric motor 190.

Although Figure 3 illustrates one example of a method 300 for hybrid rotorcraft torque management with speed droop compensation, various changes may be made to Figure 3. For example, while shown as a series of steps, various steps in Figure 3 may overlap, occur in parallel, or occur any number of times.

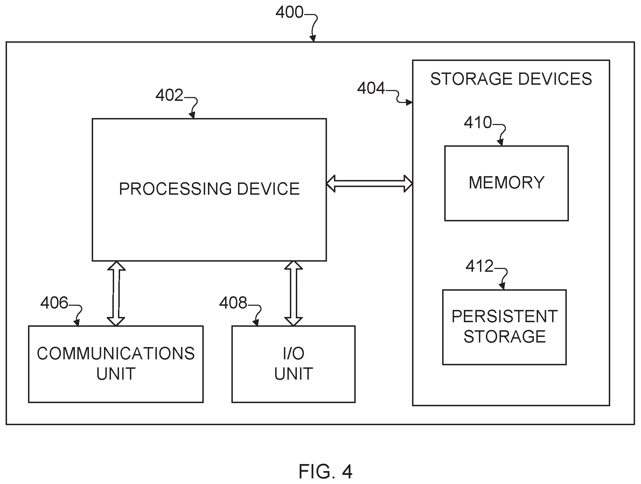

Figure 4 illustrates an example device 400 for hybrid rotorcraft torque management with speed droop compensation according to this invention. One or more instances of the device 400 (or portions thereof) may, for example, be used to, at least partially, implement the functionality of the hybrid engine control system 100 of Figure 1. However, the functionality of the hybrid engine control system 100 may be implemented in any other suitable manner.

As shown in Figure 4, the device 400 denotes a computing device or system that includes at least one processing device 402, at least one storage device 404, at least one communications unit 406, and at least one input/output (I/O) unit 408. The processing device 402 may execute instructions that can be loaded into a memory 410. The processing device 402 includes any suitable number(s) and type(s) of processors or other devices in any suitable arrangement. Example types of processing devices 402 include one or more microprocessors, microcontrollers, DSPs, ASICs, GPUs, FPGAs, or discrete circuitry.

The memory 410 and a persistent storage 412 are examples of storage devices 404, which represent any structure(s) capable of storing and facilitating retrieval of information (such as data, program code, and/or other suitable information on a temporary or permanent basis). The memory 410 may represent a random-access memory or any other suitable volatile or nonvolatile storage device(s). The persistent storage 412 may contain one or more components or devices supporting longer-term storage of data, such as a read only memory, hard drive, Flash memory, or optical disc.

The communications unit 406 supports communications with other systems or devices. For example, the communications unit 406 can include a network interface card or a wireless transceiver facilitating communications over a wired or wireless network. The communications unit 406 may support communications through any suitable physical or wireless communication link(s).

The I/O unit 408 allows for input and output of data. For example, the I/O unit 408 may provide a connection for user input through a keyboard, mouse, keypad, touchscreen, or other suitable input device. The I/O unit 408 may also send output to a display or other suitable output device. Note, however, that the I/O unit 408 may be omitted if the device 400 does not require local I/O, such as when the device 400 can be accessed remotely or operated autonomously.

In some embodiments, the instructions executed by the processing device 402 can include instructions that implement all or portions of the functionality of the hybrid engine control system 100 described above. For example, the instructions executed by the processing device 402 can include instructions for hybrid rotorcraft torque management with speed droop compensation as described above.

Although Figure 4 illustrates one example of a device 400 for hybrid rotorcraft torque management with speed droop compensation, various changes may be made to Figure 4. For example, computing devices and systems come in a wide variety of configurations, and Figure 4 does not limit this invention to any particular computing device or system.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present invention should not be read as implying that any particular element, step, or function is an essential or critical element that must be included in the claim scope. The scope of patented subject matter is defined only by the allowed claims.

While this invention has described certain embodiments and generally associated methods, alterations and permutations of these embodiments and methods will be apparent to those skilled in the art. Accordingly, the above description of example embodiments does not define or constrain this invention. Other changes, substitutions, and alterations are also possible without departing from the spirit and scope of this invention, as defined by the following claims.

## Claims

1. A method (300) comprising:
determining (302), using an engine controller, a first torque demand of an engine (152) based on predetermined performance maps;
determining (304), using the engine controller, a second torque demand of the engine (152);
summing (306), using the engine controller, the first torque demand and the second torque demand to generate a third torque demand; and
supplying (316), using the engine controller, the third torque demand to an electric motor (190).

2. The method (300) of claim 1, wherein determining, using the engine controller, a second torque demand of the engine (152) comprises:
calculating a difference between an aircraft total load profile and a predetermined aircraft load map.

3. The method (300) of claim 1, wherein determining, using the engine controller, a second torque demand of the engine (152) comprises:
using an integrator that stops integrating upon reaching electric motor torque limits or a rotor speed reaching its reference and is reset to an initial value when rotor load torque decreases or when the engine is no longer limited by its engine limit, wherein the input to the integrator is the rotor speed error, a bias, a gain, and a hysteresis band configured to adjust the rate of integration.

4. The method (300) of any preceding claim, further comprising:
before supplying (316) the third torque demand to the electric motor, applying (312), using the engine controller, one or more mechanical limiters to the third torque demand to generate a positive value of the third torque demand for motoring application, or a negative value of the third torque demand for generating application.

5. The method (300) of any preceding claim, wherein determining (302) the first torque demand based on the predetermined performance maps comprises:
calculating an unlimited theoretical engine torque from a predetermined performance map based on power demand anticipation, maximum theoretical torque, and an engine core speed request;
calculating an available engine torque from the predetermined performance map based on ambient conditions and a torque loop limiter, TLL, engine core speed request; and
calculating the first torque demand as a difference between the unlimited theoretical engine torque and the available engine torque.

6. The method (300) of any preceding claim, wherein the second torque demand comprises:
a rotor speed droop compensation term that is a function of rotor speed error and altitude.

7. The method (300) of claim 6, wherein the rotor speed error is calculated as difference between a rotor absolute speed reference and a measured rotor speed.

8. The method (300) of claim 6 or 7, wherein:
the rotor speed droop compensation term is generated using an integrator that stops integrating upon reaching electric motor torque limits or rotor speed reaching its reference, and resets to an initial value when a rotor load torque decreases or when the engine is no longer limited by its engine limit, wherein an input to the integrator is a rotor speed error, a bias, a gain, and a hysteresis band configured to adjust a rate of integration.

9. The method (300) of any of claims 6 to 8, wherein the rotor speed droop compensation term comprises a deadband (210).

10. The method (300) of any preceding claim, further comprising:
upon calculating a negative value for the third torque demand, supplying (308) the negative value of the third torque demand to the electric motor (190) to enable battery charging using electric motor regeneration.

11. The method (300) of any preceding claim, further comprising:
upon calculating a negative value for the third torque demand, supplying (310) the negative value of the third torque demand to the electric motor (190) to suppress rotor overspeed of the engine (152).

12. The method (300) of any preceding claim, further comprising:
upon calculating a positive value of the third torque demand, supplying the positive value of the third torque demand to the electric motor (190) to achieve near-zero / zero steady state speed error.

13. The method (300) of any preceding claim, further comprising:
before supplying the third torque demand to the electric motor (190), filtering the third torque demand using a low pass filter.

14. An electronic device configured for hybrid rotorcraft torque management with speed droop compensation, the electronic device comprising:
an engine (152);
an electric motor (190); and
a processor operably coupled to the engine (152) and the electric motor (190), the processor configured to cause the electronic device to carry out the method (300) of any preceding claim.

15. A non-transitory computer-readable medium comprising program code, that when executed by at least one processor of an electronic device, causes the electronic device to carry out the method (300) of any of claims 1 to 13.
